(19) **Europäisches Patentamt**

**European Patent Office**

**Office européen des brevets**

(11) Veröffentlichungsnummer: **0 305 705 B1**

(12) **EUROPÄISCHE PATENTSCHRIFT**

(45) Veröffentlichungstag der Patentschrift: **22.04.92**

(51) Int. Cl.5: **B29C 49/56**

(21) Anmeldenummer: **88111380.7**

(22) Anmeldetag: **15.07.88**

(54) **Einrichtung zum exakten und schnellen Öffnen und Verschliessen der Formhälften einer Streckblasmaschine zum Blasformen von Hohlkörpern aus thermoplastischem Kunststoff.**

(30) Priorität: **03.09.87 DE 3729451**

(43) Veröffentlichungstag der Anmeldung:
**08.03.89 Patentblatt 89/10**

(45) Bekanntmachung des Hinweises auf die
Patenterteilung:
**22.04.92 Patentblatt 92/17**

(84) Benannte Vertragsstaaten:
**AT CH DE FR GB IT LI NL SE**

(56) Entgegenhaltungen:
**FR-A- 2 552 709**
**GB-A- 944 615**
**GB-A- 1 230 090**
**US-A- 1 781 565**
**US-A- 2 290 129**

(73) Patentinhaber: **HERMANN BERSTORFF Maschinenbau GmbH**
**An der Breiten Wiese 3/5**
**W-3000 Hannover 61(DE)**

(72) Erfinder: **Voss, Hermann**
**Greevenbrook 36**
**W-2105 Seevetal 2(DE)**
Erfinder: **Mank, Manfred, Dr. Dipl.-Ing.**
**Im Kohlhof 15**
**W-2000 Hamburg 65(DE)**

**Beschreibung**

Die Erfindung betrifft eine Einrichtung, wie beschrieben im Oberbegriff des ersten Patentanspruchs.

Aus der DE-PS 33 36 071 ist eine gattungsgemäße Einrichtung bekannt, bei der die Formhälften Rollen aufweisen, die in Steuerkurven eines Steuerschiebers laufen. Die Vertikalbewegung des Steuerschiebers wird direkt eingesetzt für den Öffnungsvorgang der Formhälften, d. h. für eine Drehbewegung der Formhälften. Da die Formhälften relativ schwer sind, muß viel Masse in relativ kurzer Zeit beschleunigt und abgebremst werden, wobei die direkte Kraftübertragung viel Energie und Verschleiß verursacht.

Es ist die Aufgabe der Erfindung, einen schnellen und sehr exakten Verschließ- und Öffnungsvorgang der Formhälften bei Streckblasmaschinen zu ermöglichen, wobei der Kraftaufwand für die Beschleunigung und Abbremsung der schweren Formhälften gering gehalten werden soll.

Die Aufgabe wird durch die im kennzeichnenden Teil des ersten Patentanspruchs beschriebenen Merkmale gelöst.

Durch die Verknüpfung eines Kurvengetriebes mit einem Viergelenkgetriebe wird erreicht, daß wenig Kraft für einen schnellen Formöffnungsvorgang und Formschließvorgang erforderlich ist. Es werden hohe Beschleunigungs- und Abbremskräfte aufgenommen bei sehr exakter Führung der Formhälften.

Durch die Anordnung des Gestelldrehpunktes, der zusammenfällt mit dem Drehpunkt der Formhälftenverschwenkung unmittelbar am Ende der Trennfuge der Formhälften, wird ein sehr kurzer Verschwenkweg erreicht, wodurch der Verschwenkvorgang erheblich schneller durchgeführt werden kann.

Ein bevorzugtes Ausführungsbeispiel der Erfindung wird in den Zeichnungen gezeigt und nachfolgend erläutert.

Es zeigen:

Fig. 1     eine Draufsicht auf eine schematisiert dargestellte Anlage.

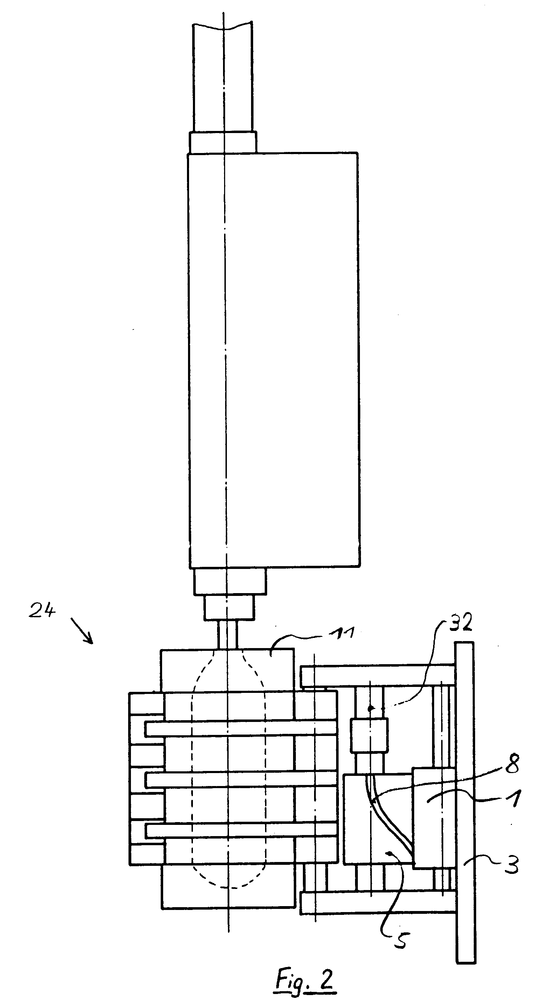

Fig. 2     eine schematisiert dargestellte Teilansicht einer Aufnahmestation.

Fig. 3     einen Querschnitt durch einen Teil einer Vorformlingaufnahmestation in geschlossenem Zustand.

Fig. 4     einen Querschnitt gemäß Fig. 3 in geöffnetem Zustand.

Fig. 5     eine teilweise Seitenansicht gemäß IV-IV in Fig. 3.

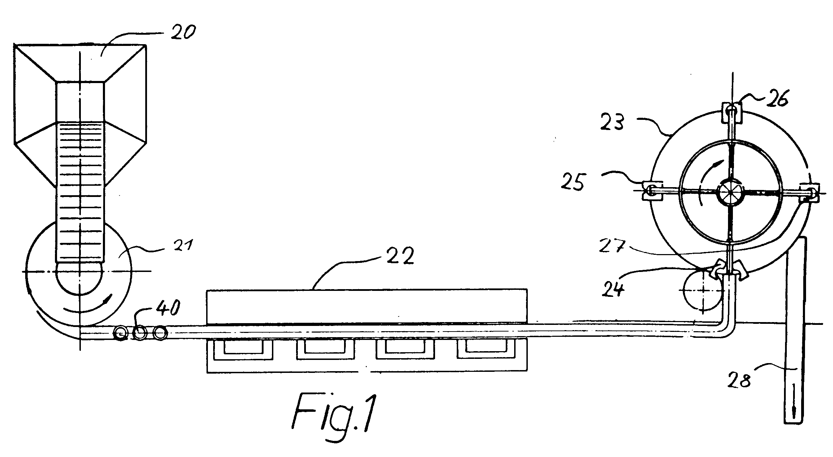

In einem in Fig. 1 gezeigten Steilförderer 20 werden die vorher auf einer Spritzgußmaschine hergestellten Vorformlinge eingegeben und einem Sortierer 21 zugeführt, der die Vorformlinge 40 übernimmt und der Heizstation 22 zuführt. Nach dem Aufheizvorgang werden die Vorformlinge an das Blasrad 23 übergeben, welches vier Formen aufweist für eine sehr schnelle Durchführung des Längsstreck- und anschließenden Aufblasvorganges des bereits aufgeheizten Vorformlings.

Die Aufnahmestation 24 wird aufgeklappt, der Vorformling aufgenommen und die Form geschlossen. Anschließend dreht sich das Blasrad um 90°, so daß eine neue aufgeklappte Form zur Verfügung steht. In den Stationen 25 und 26 wird der Streck- und Blasvorgang durchgeführt. In der Station 27 wird die Form geöffnet und der fertige Behälter wird durch die Ausgabestrecke 28 einer nicht gezeigten Verpackungsmaschine zugeführt.

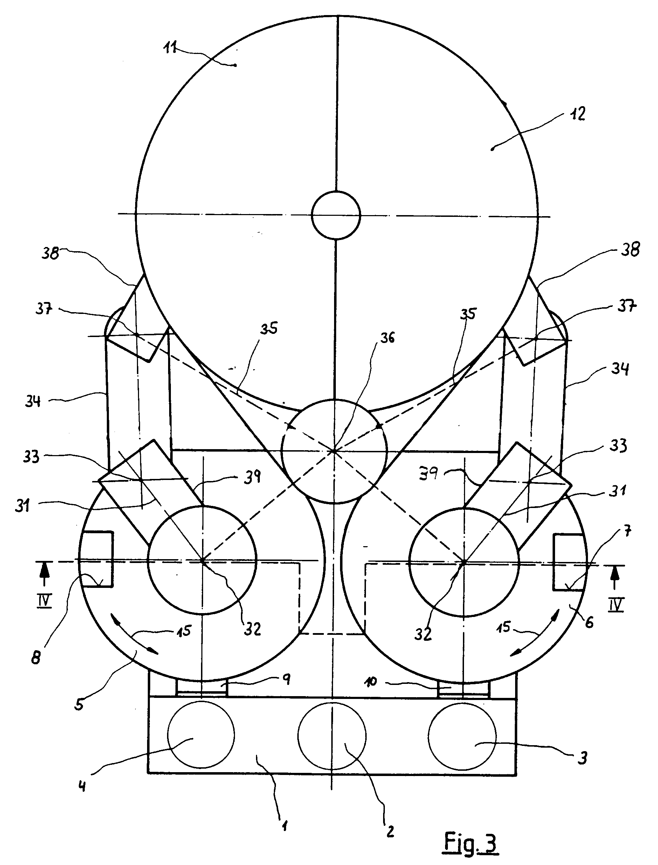

In den Fig. 3 - 5 wird die Aufnahmestation 24 teilweise im Detail gezeigt.

Ein Steuerschieber 1 ist über Führungsstangen 3 und 4 mittels eines Hydraulikzylinders 13, dessen Kolbenstange 2 an dem Steuerschieber befestigt ist, in seiner Höhe verstellbar.

An dem Steuerschieber 1 sind Rollen 9 und 10 befestigt, die in Mantelkurven 7 und 8 der Kurvenzylinder 5 und 6 laufen.

Für die symmetrisch für beide Formhälften angeordneten Teile werden gleiche Bezugszeichen verwendet.

Lenker 39 ist mit seinem einen Ende am Drehpunkt 32 mit dem Kurvenzylinder 5 und mit seinem anderen Ende im Drehpunkt 33 mit der Koppel 34 verbunden.

Die Koppel 34 verbindet die Drehpunkte 33 und 37.

Die Formhälften 11 und 12 werden mittels der Lenker 38 mit den Drehpunkten 37 verbunden.

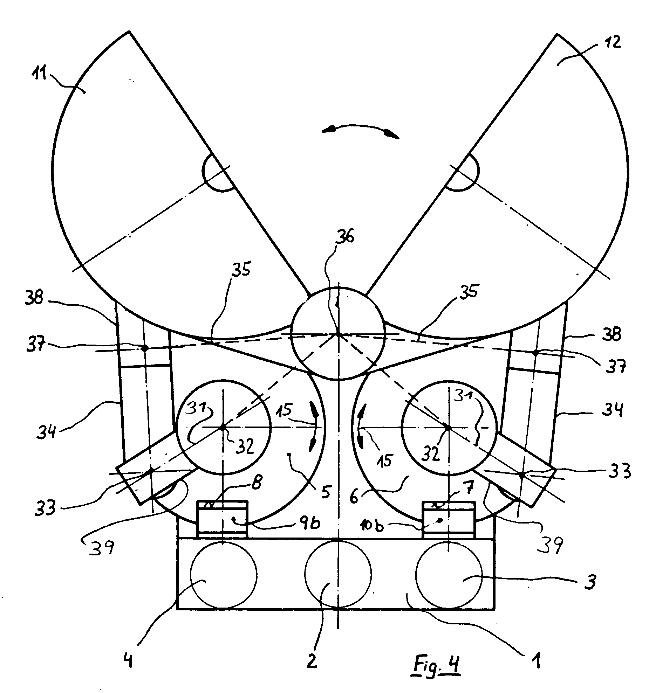

Wenn sich die Formhälften im geschlossenen Zustand befinden, wie gezeigt in Fig. 3, sind die an dem Steuerschieber 1 befestigten Kurvenrollen 9 und 10 in der mit 9a and 10a in Fig. 4 gezeigten Position. Im geöffneten Zustand befinden sich die Rollen in der mit 9b und 10b gezeigten Position. Um die Formhälften zu öffnen, wird die Kolbenstange 2 des Hydraulikzylinders 13 in den Hydraulikzylinder gefahren.

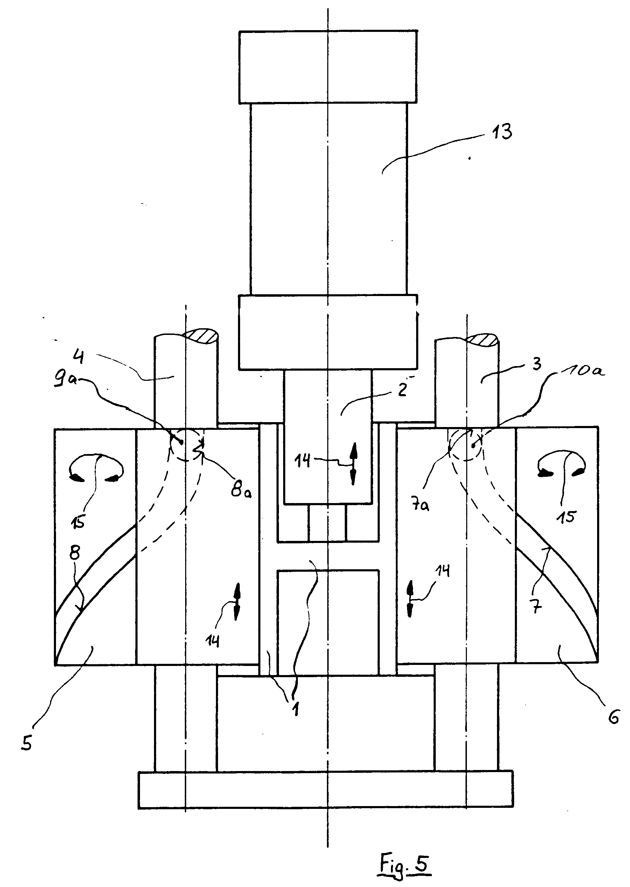

Fig. 5 zeigt die Kurvenrollen 9 und 10 in ihrer oberen Stellung 9a und 10a, d. h. die Form ist geschlossen. Ausgehend von dieser Position gleiten durch eine Abwärtsbewegung (Pfeil 14) der Kolbenstange 2 Kurvenrollen 9 und 10 in der Kurvenbahn 7 und 8, wodurch eine Drehbewegung (Pfeil 15) der Kurvenzylinder 5 und 6 erfolgt. Die Vertikalbewegung der Kolbenstange 2 wird somit in eine Drehbewegung der Kurvenzylinder 5 und 6 umgewandelt.

Die Drehbewegung (Pfeil 15) um den Drehpunkt 32 der Kurvenzylinder 5 und 6 wird von einem, sich aus den Kurvenzylindern 5 und 6, den Kurvenrollen 9 und 10 und den Mantelkurven 7 und 8 zusammensetzenden Kurvengetriebe auf ein Viergelenkgetriebe übergeben.

Das Viergelenkgetriebe setzt sich zusammen aus der Antriebsschwinge 31 mit ihrem Drehpunkt 32, der mit dem Drehpunkt 33 des Mantelkurvenzylinders 5 zusammenfällt und dem Drehpunkt 33 der Koppel 34.

Die Abtriebsschwinge 35 des Viergelenkgetriebes weist einen Gestelldrehpunkt 36 und einen gegenüberliegenden Koppeldrehpunkt 37 auf.

Die Abtriebsschwinge setzt sich zusammen aus einer Formhälfte 11, die um den Gestelldrehpunkt 36 drehbar und mit diesem befestigt ist und dem Lenker 38, der auf der einen Seite mit der Formhälfte 11 und auf der anderen Seite mit dem Koppeldrehpunkt 37 verbunden ist.

Die Öffnungs- und Schließbewegung der Formhälften 11 und 12 erfolgt somit mittels eines mit dem Kurvengetriebe verknüpften Viergelenkgetriebes, wobei durch die Anordnung des Gestelldrehpunktes 36 unmittelbar am Ende der Formteilfuge zwischen den Formhälften 11 und 12 ein äußerst kurzer Verschwenkweg verwirklicht wird.

Es wird erreicht, daß sich auf eine sehr exakte Weise eine Vertikalbewegung in eine Drehbewegung umwandelt, die wiederum die Formhälften 11 und 12 bewegt.

Besonders vorteilhaft ist, daß durch die Verknüpfung des Kurvengetriebes mit dem Viergelenkgetriebe sehr exakte Bewegungen ermöglicht werden, die sehr schnell und störungsfrei durchführbar sind, ohne daß sich irgendwelche Maschinenteile berühren können und erhebliche Geräusche verursachen. Bei einem Ausstoß von ca. 4.000 Kunststoffflaschen pro Stunde ist dieser Aspekt von erheblicher Bedeutung.

Die jeweiligen Endstellungen der bewegten Maschinenteile werden erreicht, ohne daß z. B. die Formhälften 11 und 12 gegeneinanderschlagen, weil durch die Ausbildung der Kurven 7 und 8 derart, daß die jeweiligen Kurvenendbereiche 7a, 8a vertikal verlaufen, eine sanfte aber äußerst exakte Abbremsung der Drehbewegung erfolgt.

**Patentansprüche**

1. Einrichtung zum exakten und schnellen Öffnen und Schließen der Formhälften (11, 12) einer Streckblasmaschine zum Blasformen von Hohlkörpern aus thermoplastischem Kunststoff mit zwei Formhälften aufweisender Blasform, deren Formhälften von einem Blasrad aufgenommen und um einen Gestelldrehpunkt verschwenkbar sind,
   **dadurch gekennzeichnet,**
   daß die Formhälften (11, 12) zusammen mit einem Gestelldrehpunkt (36) und einem Koppeldrehpunkt (37) Abtriebsschwingen (35) eines Viergelenkgetriebes bilden,
   daß die Antriebsschwingen (31) des Viergelenkgetriebes gebildet werden durch Mantelkurven (7, 8) aufweisende Kurvenzylinder (5, 6), in die Kurvenrollen (9, 10) eines Steuerschiebers (1) eingreifen, und
   daß der Gestelldrehpunkt (36) des Viergelenkgetriebes unmittelbar am Ende der Formteilfuge angeordnet ist und mit dem Verschwenkpunkt der Formhälften (11, 12) zusammen fällt.

2. Einrichtung nach Anspruch 1,
   **dadurch gekennzeichnet,**
   daß die oberen und unteren Kurvenendbereiche (7a, 8a) als vertikal mit der Achse der Mantelkurvenzylinder (5, 6) parallel verlaufende gerade Bereiche ausgebildet sind.

**Claims**

1. Device for the exact and rapid opening and closing of the mould halves (11, 12) of a stretch-blow moulder for the production of hollow bodies made of thermoplastics with a blow mould consisting of two halves, the said mould halves being supported by a blowing wheel and swivelling around a frame pivot point,
   **characterized in that**
   the mould halves (11, 12) together with a frame pivot point (36) and a coupler pivot point (37) form the driven rocker arms (35) of a four-link mechanism,
   that the driving rocker arms (31) of the four-link mechanism are formed by cylinder-type cams (5, 6) provided with cam tracks (7, 8) with which the cam rollers (9, 10) of a control follower (1) engage, and
   that the frame pivot point (36) of the four-link mechanism is arranged exactly at the end of the mould parting line and corresponds to the pivot point of the mould halves (11, 12).

2. Device as recited in claim 1,
   **characterized in that**
   the upper and the lower end sections of the cam tracks (7a, 8a) are designed as straight vertical sections being in parallel with the axis of the cylinder-type cams (5, 6).

**Revendications**

1. Dispositif pour l'ouverture et la fermeture exactes et rapides des moitiés de moule (11, 12) d'une machine de soufflage par bi-orientation pour le moulage par soufflage de corps creux à partir d'un thermoplastique comprenant un moule de soufflage divisé en deux moitiés de moule qui sont portées par une roue de soufflage et sont pivotables autour d'un pivot de bâti,

**caractérisé**

en ce que les moitiés de moule (11, 12) forment en commun avec un pivot de bâti (36) et un pivot de bielle (37) des manivelles oscillantes entraînées (35) d'un quadrilatère articulé,

en ce que les manivelles oscillantes d'entraînement (31) du quadrilatère articulé sont formées par des cames cylindriques (5, 6) présentant des rainures (7, 8) dans lesquelles engrènent les galets de came (9, 10) d'un tiroir de distribution et

en ce que le pivot de bâti (36) d'un quadrilatère articulé est arrangé directement à la fin du plan de joint et coïncide avec le point de pivotement de moitiès de moules (11, 12).

2. Dispositif selon revendication 1,

**caractérisé**

en ce que les extrémités supérieure et inférieure de la rainure (7a, 8a) sont conçues comme parties droites verticales étant en parallèle avec l'axe des cames cylindriques (5, 6).

Fig.1

24

11

32

8

1

3

5

*Fig. 2*

Fig.3

Fig. 4

Fig. 5